# NOUVEAU FASCICULE DE BREVET EUROPEEN

(11) **EP 1 319 924 B2**
(45) Date de publication et mention de la décision concernant l'opposition: **11.04.2012**
(45) Mention de la délivrance du brevet: 28.11.2007
(21) Numéro de dépôt: 01811216.9
(22) Date de dépôt: 12.12.2001
(51) Int. Cl.: G01B 5/06, B66B 11/04, G01B 3/00

(54) **Appareil de mesure d'altitude**
Höhenmessgerät
Height gauge

(43) Date de publication de la demande: 18.06.2003
(73) Titulaire: TESA SA, 1020 Renens (CH)
(72) Inventeur: Jordil, Pascal, 1612 Ecoteaux (CH); Zanier, Adriano, 1008 Prilly (CH); Zufferey, Charles-Henri, 1976 Erde (CH)
(74) Mandataire: P&TS SA (AG, Ltd.)

(56) Documents cités:
- EP-A- 0 834 463
- EP-A1- 0 834 463
- DE-A1- 3 109 856
- US-A- 3 996 669
- US-A- 4 465 162
- US-A- 4 679 326
- US-A- 4 924 598

## Description

La présente invention concerne une machine à mesurer, notamment une colonne de mesure de dimension longitudinale, par exemple une colonne de mesure de hauteur.

Des colonnes de mesure de hauteur sont décrites par exemple dans le document US4924598. Elles sont utilisées par exemple pour la mesure ou la comparaison de dimensions, par exemple dans des ateliers de mécanique. Une colonne de mesure comprend généralement un bâti fixe avec un socle, un chariot pouvant se déplacer verticalement le long du bâti, un dispositif d'entraînement du chariot et un système de mesure de la position verticale du chariot. Une touche est liée au chariot et destinée à être mise en contact avec la pièce à mesurer. Certaines colonnes de mesure comportent un socle muni de moyens permettant de créer un coussin d'air afin de déplacer aisément la colonne de mesure de hauteur sur le plan de travail.

La colonne de mesure décrite dans US4924598 comprend un moteur électrique logé dans le socle et entraînant la poulie inférieure au travers d'un axe ou d'une courroie de transmission. La poulie inférieure entraîne une courroie d'entraînement liée au chariot, ainsi qu'un contrepoids se déplaçant en sens opposé au chariot. La courroie d'entraînement est tendue entre les poulies inférieures et supérieures. Le chariot comporte des roulements pour s'appuyer sur des rails de guidage liés au bâti.

Le système de mesure électronique permet de déterminer la position du chariot, et donc de la touche, et de l'afficher sur un affichage électronique. La résolution et la précision que l'on attend de ce type de colonnes de mesure est de l'ordre du micron.

Cette précision dépend pour une part importante de la force de contact entre la touche et la pièce à mesurer. Une force de contact importante entraîne une flexion de la touche et/ou de la pièce, voire une déformation élastique du matériau, pouvant influencer la mesure. La force de contact entre la touche et la pièce à mesurer doit donc être minime ou, en tous les cas, identique à chaque mesure.

Il est donc essentiel de réaliser le système d'entraînement de façon à ce que la force de traction exercée sur le chariot soit reproductible et indépendante de la position longitudinale du chariot. Dans ce but, il est important de veiller à ce que la courroie d'entraînement soit suffisamment tendue pour ne pas glisser sur la poulie d'entraînement. Une tension importante provoque néanmoins des forces et des moments sur le chariot qui peuvent varier selon la position du chariot et influencer ainsi la mesure. Pour absorber ces contraintes et réduire le jeu, il est nécessaire de limiter au maximum le jeu entre les roulements du chariot et les rails de guidage sur le bâti. Une forte pression entre les roulements du chariot et les rails augmente cependant la résistance de roulement, ce qui rend le déplacement du chariot malaisé voire bruyant. Une résistance de roulement importante impose par ailleurs une force de traction de la courroie d'entraînement encore plus importante, ce qui augmente encore les contraintes exercées par la courroie d'entraînement sur le chariot et sur la touche.

Par ailleurs, il est souhaitable de réduire l'encombrement et le poids de la colonne de mesure, et de diminuer le nombre de pièces distinctes. Une colonne lourde et encombrante, constituée de nombreux éléments distincts, est en effet difficile à manipuler, chère à produire et à transporter, et davantage exposée aux pannes et défaillances.

D'autre part, l'utilisation d'une courroie entre le moteur et la poulie d'entraînement est une source de frottement et de jeux supplémentaire, nuisible à la précision de l'entraînement et donc à la précision de la mesure. L'entraînement direct de la poulie par le moteur n'est pas réalisable lorsque le chariot peut être déplacé à la main par l'opérateur ; lors de déplacements brusques, le moteur pourrait en effet être détruit par la tension électrique générée.

Le brevet US399669 décrit une colonne de mesure dans la quelle la touche de palpage est entraînée par une paire de vis sans fin.

US4465162 et EP0834463 décrivent des dispositifs d'entraînement de poulies d'ascenseur. Ces dispositifs, qui peuvent incorporer des réducteurs et ne comportent pas de friction, ne sont pas adaptés pour une application de mesure de dimensions.

Un but de la présente invention est de proposer une colonne de mesure de dimensions longitudinale qui permette d'éviter les inconvénients des colonnes de l'art antérieur. En particulier, un but de la présente invention est de réaliser une colonne de mesure de dimensions longitudinales dans laquelle la courroie ou le câble d'entraînement du chariot soit moins tendu que dans les dispositifs de l'art antérieur, et dont l'encombrement global est réduit.

Selon l'invention, ces buts sont atteints au moyen d'une colonne de mesure comprenant les caractéristiques de la revendication 1, des variantes préférentielles étant par ailleurs indiquées dans les revendications dépendantes.

Ceci à l'avantage que la tension de la courroie au niveau de la poulie d'entraînement supérieure peut être produite uniquement par la masse du chariot et du contrepoids, sans que des tendeurs supplémentaires ne soient nécessaire. La tension au niveau de la poulie inférieure n'étant pas critique, il est possible d'utiliser des courroies d'entraînement moins tendues que dans l'art antérieur.

L'invention sera mieux comprise à la lecture de la description d'un exemple de réalisation préférentiel illustré par les figures annexées qui montrent :

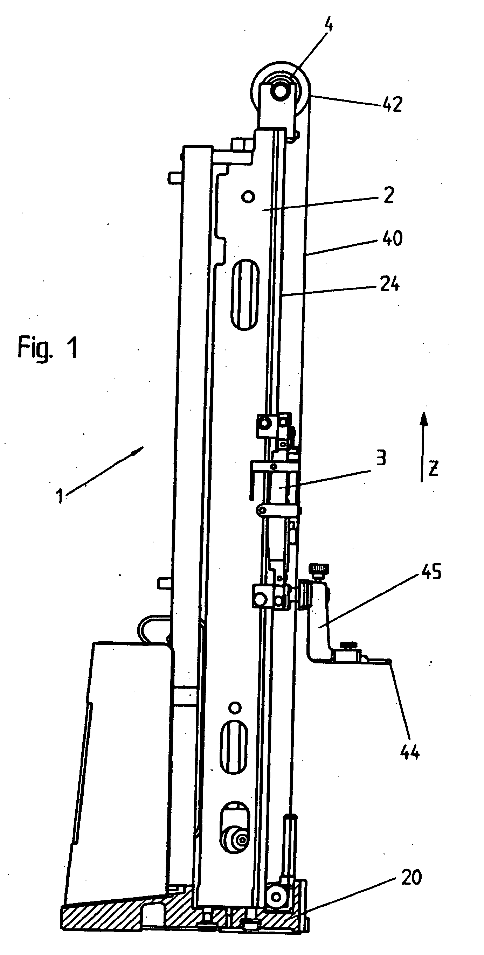

La figure 1 une vue latérale d'une colonne de mesure de dimensions longitudinales selon l'invention.
La figure 2 une vue en éclaté du moteur, de la friction et de la poulie supérieure.
La figure 3 une vue en perspective de la fourche de maintien de l'entraînement au-dessus du bâti.

Un exemple de colonne de mesure selon l'invention comprend un bâti 2 vertical monté perpendiculairement sur un socle 20. Le bâti comprend une face avant munie d'une règle non représentée et de rails de guidage 24. La règle est munie d'électrodes capacitives ou magnétiques, par exemple, permettant une mesure de position absolue ou relative au moyen d'un capteur non représenté monté sur le chariot 3. Les rails 24 peuvent être rapportés ou de préférence usiné sur bâti 2 et constituent une surface d'appui plane sur laquelle se déplacent des roulements du chariot 3. D'autres rails sur une face arrière du bâti 2 forment une surface de roulement arrière pour des roulements supplémentaires.

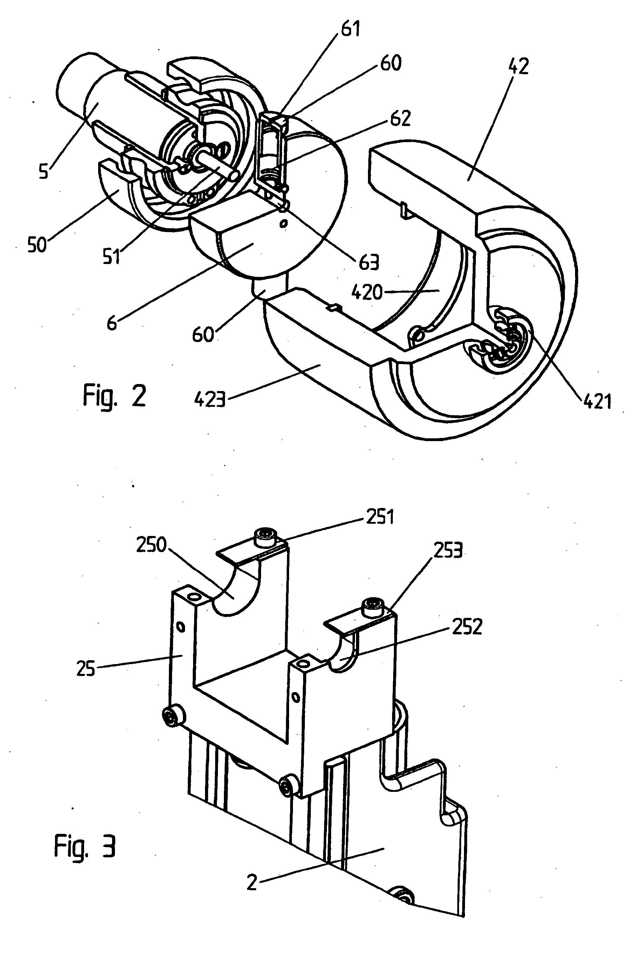

Un mécanisme d'entraînement motorisé lié au bâti comprend une poulie supérieure 42 et une poulie inférieure non représentée. Le mécanisme d'entraînement comprend en outre un moteur décrit en relation avec la figure 2 et permettant d'entraîner en rotation la poulie supérieure 42, ainsi qu'un câble ou une courroie 40 formant une boucle tendue entre les deux poulies. Le chariot 3 est fixé sur le premier brin de la courroie 40 et peut ainsi être entraîné selon l'axe vertical z au moyen du moteur. Un contrepoids non représenté fixé sur l'autre brin de la courroie 40 se déplace en sens opposé au chariot 3 à l'intérieur du bâti 2. La force de traction de la courroie 40 est contrôlée avec précision par exemple au moyen d'une friction décrite plus bas entre le moteur et la poulie d'entraînement, et/ou en contrôlant le couple d'entraînement du moteur.

Une touche 44 est montée sur le chariot 3 au moyen d'un porte-touche 45. L'extrémité sphérique de la touche 44 est destinée à être mise en contact avec la pièce à mesurer. Un système de mesure de type capacitif, inductif, optoélectronique ou magnétorésistif permet d'indiquer sur un affichage électronique non représenté la position de la touche 44 ou le déplacement effectué par la touche 44 entre deux points de mesure. Le système de mesure comporte par exemple un capteur électronique monté sur le chariot 3 en regard de la règle 22 et relié par une natte de câble souple non représentée, éventuellement par une liaison radio locale, à une console de commande et d'affichage de mesure.

Le dispositif d'entraînement motorisé est illustré plus en détail sur les figures 2 et 3. Il comporte une poulie supérieure 42 entraînant la courroie 40 (non représentée) par frottement sur sa face externe 423. La poulie 42 peut être entraînée en rotation dans les deux sens et avec une vitesse variable au moyen du moteur d'entraînement 5 intégré. Le moteur électrique 5 comporte de préférence un réducteur intégré pour réduire la vitesse de rotation de l'axe 51 et augmenter le couple transmis. Une roue de friction 6 est entraînée en rotation par l'axe 51 engagé dans l'ouverture 63. La roue 6 comporte dans cet exemple deux patins de friction 60 appuyés chacun par un ressort ou un élément élastique 62 contre la face interne 420 de la poulie supérieure 42. Dans une variante, on pourrait avoir un seul ressort appuyant sur les deux patins, cette exécution compensant mieux le défaut de forme (mal-rond) de la face interne de la poulie supérieure. La surface de friction des patins de friction 60 est de préférence bombée avec le même diamètre de courbure que la face interne 420 et comporte une ou plusieurs rainures 61 par lesquelles les éventuelles poussières ou minuscules copeaux entre les deux surfaces de friction peuvent être évacués. L'entraînement de la poulie 42 est réalisé par le couple de frottement entre les patins 6 et la poulie 42 ; ce couple est déterminé par les ressorts 62. Les ressorts 62 sont utilisés dans leur zone linéaire de fonctionnement, c'est-à-dire que la pression d'appui des patins 60 contre la surface 420 dépend très peu de l'épaisseur des patins 60.

Le corps du moteur 5 est maintenu par un ressort 251 dans une échancrure 250 prévue dans une fourche 25 fixée au sommet du bâti 2. Un roulement à billes 50 (représenté sans les billes) permet à la poulie 42 de tourner autour du corps du moteur. La poulie 42 est maintenue au travers d'un deuxième roulement 421 par un deuxième ressort 253 dans une deuxième échancrure 252 prévue dans l'autre brin de la fourche 25.

On constatera que cette construction est extrêmement compacte et permet ainsi de gagner de la place. Par ailleurs, elle fait appel essentiellement à des pièces 50, 6, 60, 42, 421 tournées, qui sont faciles à usiner et donc économiques.

La courroie d'entraînement 40 est tendue sur la surface extérieure de la poulie 42 uniquement par le poids du chariot 3 sur un des deux brins et par le poids du contrepoids sur l'autre brin. Aucun tendeur supplémentaire n'est nécessaire (bien que possibles), ce qui permet de simplifier la construction. La tension sur la courroie 40 peut ainsi être réduite, ce qui limite les contraintes appliquées sur le chariot 3 et améliore la précision.

La friction 6 permet de contrôler le couple transmis par le moteur d'entraînement 5 à la poulie 42, et notamment de limiter le couple à une valeur prédéterminée notamment lorsque la touche 44 est en appui contre la pièce à mesurer. La force d'appui de la touche 44 contre la pièce mesurée est ainsi déterminée par les caractéristiques de la friction 6, notamment par les caractéristiques des ressorts 62. Inversement, la friction 6 permet aussi de protéger le moteur d'un échauffement intempestif voire de la destruction lorsque le chariot est déplacé brusquement à la main, ou lorsque le mouvement du chariot est bloqué.

Le moteur d'entraînement 5 est commandé par une électronique de commande non représentée permettant de varier le courant du moteur de manière à contrôler la vitesse de rotation et le couple d'entraînement. Il est aussi possible, dans le cadre de cette invention, de contrôler le couple d'entraînement et donc la pression d'appui de la touche 44 en agissant sur ce courant. Ce contrôle électrique peut être effectué en plus ou en remplacement du contrôle mécanique de couple effectué à l'aide de la friction 6.

L'agencement du dispositif d'entraînement motorisé avec la poulie 42, le moteur d'entraînement 5 et la friction 6 au sommet de la colonne de mesure est avantageuse, comme on l'a vu, pour réduire la tension nécessaire sur la courroie d'entraînement 40. Il est cependant également possible dans le cadre de cette invention de bénéficier des avantages d'une construction compacte et intégrée en plaçant le dispositif d'entraînement décrit et revendiqué au bas de la colonne de mesure.

## Revendications

1. Colonne de mesure de dimension longitudinale (1) comprenant:
un bâti (2),
un chariot (3) pouvant se déplacer le long d'un axe de mesure (z) le long du bâti, une touche (44) liée audit chariot et destinée à être mise en contact avec la pièce à mesurer,
un dispositif d'entraînement motorisé du chariot comprenant un câble ou une courroie (40) pour entraîner ledit chariot en déplacement le long dudit axe de mesure et un moteur d'entraînement (5),
un système de mesure de la position dudit chariot (3) le long dudit axe de mesure,
dans laquelle ledit câble ou ladite courroie (40) forme une boucle tendue entre une poulie supérieure (42) sur la partie supérieure dudit bâti (2) et une poulie inférieure sur la partie inférieure dudit bâti, ledit chariot (3) étant monté sur un des deux brins de ladite boude, un contrepoids étant monté sur l'autre desdits deux brins de ladite boucle,
ledit moteur d'entraînement (5) étant disposé sur la partie supérieure dudit bâti et entraînant ladite poulie supérieure (42) en rotations au travers d'une friction (6),
**caractérisé en ce que** ledit moteur d'entraînement (5) et ladite friction (6) sont intégrés à l'intérieur de ladite poulie supérieure (42).

2. Colonne de mesure selon la revendication précédente, dans laquelle ledit moteur d'entraînement (5) entraîne ladite poulie supérieure (42) au travers d'un réducteur.

3. Colonne de mesure selon la revendication précédente, dans laquelle un roulement (50) est prévu entre le corps dudit moteur d'entraînement (5) et la face interne (420) de ladite poulie supérieure (42).

4. Colonne de mesure selon l'une des revendications 1 ou 3, dans laquelle ladite friction (6) comporte une roue de friction (6) entraînée par ledit moteur d'entraînement (5), ladite roue de friction (6) entraînant elle-même ladite poulie supérieure (42) au travers d'au moins un patin de friction (60).

5. Colonne de mesure selon la revendication précédente, dans laquelle la force de frottement entre ledit au moins un patin de friction (60) et ladite poulie supérieure (42) est déterminée par un ressort (62) appuyant ledit patin de friction (6) contre la face interne (420) de ladite poulie supérieure (42).

6. Colonne de mesure selon l'une des revendications 4 ou 5, dans laquelle ledit au moins un patin de friction (6) comporte au moins une rainure (61) sur sa surface de friction.

7. Colonne de mesure selon l'une des revendications précédentes, dans laquelle ledit moteur d'entraînement (5) est commandé par une électronique de commande permettant de varier le courant dudit moteur de manière à contrôler le couple d'entraînement.

8. Colonne de mesure selon l'une des revendications 1 à 7, dans laquelle ledit moteur d'entraînement (5) et ladite poulie supérieure (42) sont montés sur une fourche (25) au sommet dudit bâti, le corps dudit moteur d'entraînement (5) étant maintenu par l'un des brins de ladite fourche et ladite poulie supérieure étant liée à l'autre brin de ladite fourche au travers d'un roulement (421).

## Claims

1. Column for measuring longitudinal dimensions (1) comprising:
a supporting frame (2),
a carriage (3) capable of moving along a measuring axis (z) along the supporting frame,
a probe tip (44) connected to said carriage and designed to be brought into contact with the piece to be measured,
a motorized driving device of the carriage comprising a cable or belt (40) for moving said carriage along said measuring axis and a driving motor (5),
a system for measuring the position of said carriage (3) along said measuring axis,
wherein said cable or said belt (40) forms a loop tensed between an upper pulley (42) on the upper part of said supporting frame (2) and a lower pulley on the lower part of said supporting frame, said carriage (3) being mounted on one of the two ends of said loop, a counterweight being mounted on the other of said two ends of said loop,
wherein said driving motor (5) is placed on the upper part of said supporting frame and drives said upper pulley (42) in rotation through a friction element (6), **characterized in that** said driving motor (5) and said friction element (6) are integrated inside said upper pulley (42).

2. Measuring column according to the preceding claim, wherein said driving motor (5) drives said upper pulley (42) through a reducing gear.

3. Measuring column according to the preceding claim, wherein a bearing (50) is provided between the body of said driving motor (5) and the inner side (420) of said upper pulley (42).

4. Measuring column according to one of the claims 2 or 3, wherein said friction element (6) comprises a friction wheel (6) driven by said driving motor (5), said friction wheel (6) driving itself said upper pulley (42) through at least one friction block (60).

5. Measuring column according to the preceding claim, wherein said friction force between said at least one friction block (60) and said upper pulley (42) is determined by a spring (62) pressing said friction block (6) against the inner side (420) of said upper pulley (42).

6. Measuring column according to one of the claims 4 or 5, wherein said at least one friction block (6) comprises at least one groove (61) on its friction surface.

7. Measuring column according to one of the preceding claims, wherein said driving motor (5) is controlled by control electronics allowing the current of said motor to be varied so as to control the driving torque.

8. Measuring column according to one of the claims 2 to 7, wherein said driving motor (5) and said upper pulley (42) are mounted on a fork (25) on the top of said supporting frame, the body of said driving motor (5) being held by one of the ends of said fork and said upper pulley being connected to the other end of said fork through a bearing (421).

## Patentansprüche

1. Säule zur Messung von longitudinalen Dimensionen (1) mit:
einem Gestell (2),
einem Wagen (3), der sich entlang einer Messachse (z) entlang des Gestells bewegen kann,
einem Taster (44), der mit dem besagten Wagen verbunden ist und dazu bestimmt ist, in Kontakt mit dem Messstück gebracht zu werden,
einer motorisierten Antriebvorrichtung des Wagens mit einem Kabel oder Riemen (40), um den besagten Wagen entlang der besagten Messachse anzutreiben, und einem Antriebmotor (5),
einem Messsystem der Position des besagten Wagens (3) entlang der besagten Messachse,
worin das besagte Kabel oder der besagte Riemen (40) eine Schlaufe bildet, welche zwischen einer oberen Seilscheibe (42) auf der oberen Seite des besagten Gestells (2) und einer unteren Seilscheibe auf der unteren Seite des besagten Gestells angespannt ist, wobei der besagte Wagen (3) auf einem der beiden Enden der besagten Schlaufe montiert ist, wobei ein Gegengewicht auf dem anderen der besagten zwei Enden der besagten Schlaufe montiert ist,
wobei der besagte Antriebmotor (5) auf die oberen Seite des besagten Gestells angeordnet ist und die besagte obere Seilscheibe (42) durch eine Kupplung (6) in Drehung antreibt, **dadurch gekennzeichnet, dass** worin der besagte Antriebmotor (5) und die besagte Kupplung (6) innerhalb der besagten oberen Seilscheibe (42) integriert sind.

2. Messsäule gemäss dem vorhergehenden Anspruch, worin der besagte Antriebmotor (5) die besagte obere Seilscheibe (42) durch eine Untersetzungsgetriebe antreibt.

3. Messsäule gemäss dem vorhergehenden Anspruch, worin ein Lager (50) zwischen dem Körper des besagten Antriebmotors (5) und der Innenseite (420) der besagten oberen Seilscheibe (42) vorgesehen ist.

4. Messsäule gemäss einem der Ansprüche 2 oder 3, worin die besagte Friktion (6) ein durch den besagten Antriebmotor (5) angetriebenes Friktionsrad (6) umfasst, wobei das besagte Friktionsrad (6) seinerseits die besagte obere Seilscheibe (42) durch mindestens einen Friktionsgleitschuh (60) antreibt.

5. Messsäule gemäss dem vorhergehenden Anspruch, worin die Friktionskraft zwischen dem besagten mindestens einem FriktionsGleitschuh (60) und der besagten oberen Seilscheibe (42) durch eine Feder (62) bestimmt wird, welche den besagten Friktionsgleitschuh (6) gegen die Innenseite (420) der besagten oberen Seilscheibe (42) drückt.

6. Messsäule gemäss einem der Ansprüche 4 oder 5, worin der besagte mindestens ein Friktionsgleitschuh (6) mindestens eine Rille (61) auf seiner Friktionsfläche aufweist.

7. Messsäule gemäss einem der vorhergehenden Ansprüche, worin der besagte Antriebmotor (5) durch eine Steuerelektronik gesteuert wird, welche den Strom des besagten Motors zu variieren erlaubt, um den Antriebmoment zu kontrollieren.

8. Messsäule gemäss einem der Ansprüche 2 bis 7, worin der besagte Antriebmotor (5) und die besagte obere Seilscheibe (42) auf einer Gabel (25) am oberen Teil des besagten Gestells montiert sind, wobei der Körper des besagten Antriebmotors (5) durch einen der Zacken der besagten Gabel gehalten wird und die besagte obere Seilscheibe am anderen Zacken der besagten Gabel durch einen Lager (421) verbunden ist.
